# EUROPEAN PATENT SPECIFICATION

(11) **EP 4 177 735 B1**
(45) Date of publication and mention of the grant of the patent: **01.05.2024**
(21) Application number: 22769541.8
(22) Date of filing: 08.04.2022
(51) Int. Cl.: G06F 8/65, G06F 21/60, G06F 21/62, H04L 67/145

(54) **NOVEL PORTABLE PROGRAM UPGRADING METHOD**
NEUES TRAGBARES PROGRAMMAUFRÜSTUNGSVERFAHREN
NOUVEAU PROCÉDÉ DE MISE À NIVEAU DE PROGRAMME PORTABLE

(30) Priority: 24.09.2021 CN 202111117889
(43) Date of publication of application: 10.05.2023
(73) Proprietor: Changzhou Xingyu Automotive Lighting Systems Co., Ltd., Xinbei District Changzhou Jiangsu 213022 (CN)
(72) Inventor: YU, Xiaozhou, Changzhou Jiangsu 213022 (CN); XU, Lei, Changzhou Jiangsu 213022 (CN)
(74) Representative: Frick, Robert
(86) International application number: PCT/CN2022/085725
(87) International publication number: WO 2023/045300

(56) References cited:
- CN-A- 107 733 720
- CN-A- 111 104 143
- CN-A- 112 579 130
- CN-A- 113 568 646
- US-A1- 2003 191 955
- US-A1- 2017 034 204

## Description

### TECHNICAL FIELD

The present disclosure belongs to the field of electronic technologies, and relates to a novel portable program upgrading method.

### BACKGROUND

Mature electronic devices are always accompanied by a large number of testing, modification, retesting, and remodification processes. Only products verified in real vehicles are stable and reliable.

For a conventional electronic product, a casing has to be disassembled once a problem occurs, and the damaged appearance or structure will directly result in scrapping of the product, thus wasting a large amount of time and money.

Currently, many electronic devices on an automobile are provided with Local Interconnect Network (LIN) or Controller Area Network (CAN) buses, and the remote upgrade may be implemented by means of bus communication without disassembly, so as to achieve the same purpose as the original disassembly and repair, which is convenient and fast.

Generally, after-sale repair personnel has a relatively scarce knowledge reserve, and if everyone is provided with a computer, and the remote upgrade is implemented by an upper computer of the Personnel Computer (PC), a requirement for the personnel is a bit harsh, and tedious operations tend to cause failed upgrade.

US 2017/034204 A1 deals with monitoring for exploitation of vulnerabilities of a heartbeat protocol, in particular a Transport Layer Security (TLS)/Secure Sockets Layer (SSL) "Heartbeat" exploit. The Heartbeat exploit takes advantage of a vulnerability in an open source implementation of SSL known as OpenSSL. The vulnerability arises due to an incorrect implementation of an extension to the SSL protocol known as the "heartbeat extension" defined in RFC6520 (Seggelmann et al., Internet Engineering Task Force (IETF), February 2012). According to the heartbeat extension, "heartbeat" packets can be exchanged between a client and a server communicating via an encrypted connection in order to keep the encrypted connection alive, for example in the absence of substantive packet communication.

### SUMMARY

In order to solve the above-mentioned technical problems, an objective of the present disclosure is to provide a novel portable program upgrading method, which achieves technical objectives that programs of a plurality of different to-be-upgraded devices are upgraded by one portable upgrading device, and the program upgrading accuracy is guaranteed.

In order to achieve the above-mentioned objective, the following technical solution is adopted in the present disclosure. A novel portable program upgrading method is provided, including the following steps: step 1: establishing a protocol packet pool in a portable upgrading device, the protocol packet pool including a protocol packet database and an encrypted heartbeat protocol database, storing a plurality of encrypted heartbeat protocols in the encrypted heartbeat protocol database, and storing a plurality of protocol packets in the protocol packet database; establishing a mapping relation table between storage addresses of the protocol packets and the encrypted heartbeat protocols in the protocol packet pool; establishing a source program data pool in the portable upgrading device, and storing several pieces of source program data in the source program data pool, the source program data being configured for upgrading a program of a to-be-upgraded device; establishing a password pool in the portable upgrading device, the password pool including a password comparison table storage region and a password data storage region, and storing specific data of several passwords and last replacement information in the password data storage region, the specific data of the passwords including the passwords, and the last replacement information being an old password reserved after a password of the passwords is replaced, and replacement time information; establishing and storing a relationship list among a storage address of the source program data, a password storage address corresponding to the source program data and a protocol packet address corresponding to a source program in the password comparison table storage region; and establishing a program attribute lookup module in the portable upgrading device, establishing a mapping relationship list among the protocol packet pool, the source program data pool and the password pool in the program attribute lookup module, and establishing a source program retrieval engine.

Step 2: sending an unencrypted heartbeat protocol to the to-be-upgraded device by the portable upgrading device through a programming interface to determine whether a protocol packet used is correct, and if the protocol packet is incorrect at this point, returning no heartbeat protocol data by the to-be-upgraded device, displaying, by the portable upgrading device, information of reselecting a type of the protocol packet and a source program thereof, prompting an operator to perform selection, and then executing the step 2; and if the protocol packet is correct, returning heartbeat protocol data by the to-be-upgraded device, and executing step 3.

Step 3: continuously sending, by the portable upgrading device, an encrypted heartbeat protocol of the encrypted heartbeat protocols three times at intervals to judge whether a correct encrypted heartbeat reply is received; if the correct encrypted heartbeat reply is received after the encrypted heartbeat protocol is sent, which proves that a heartbeat protocol between the portable upgrading device and the to-be-upgraded device is correct, executing step 4; and if no correct encrypted heartbeat reply is received after the encrypted heartbeat protocol is sent, which proves that the heartbeat protocol between the portable upgrading device and the to-be-upgraded device is incorrect, and a version of the corresponding source program is also incorrect, at this point, prompting the operator to reselect an encrypted heartbeat protocol packet and a source program, and after the reselection by the operator, executing the step 2.

Step 4: determining an address of the source program and transmitting a first part of the source program to the to-be-upgraded device by the portable upgrading device.

Step 5: after the first part of the source program is transmitted completely, sending a password in the password pool corresponding to the source program by the portable upgrading device; and judging, by the portable upgrading device, whether a correct reply of the to-be-upgraded device is received: if the correct reply of the to-be-upgraded device is received, executing step 6; and if no correct reply of the to-be-upgraded device is received, executing step 7.

Step 6: determining the address of the source program and transmitting a second part of the source program to the to-be-upgraded device by the portable upgrading device; and after the second part of the source program is transmitted completely, prompting, by the portable upgrading device, that upgrade is successful, displaying, by the portable upgrading device, all node information related to the upgrade, and skipping to step 10.

Step 7: displaying password error information and displaying password-related modification information and current password information by the portable upgrading device.

Step 8: waiting for selection of a user by the portable upgrading device, and performing timing by a timer: if the user performs selection, executing step 9; and if no selection operation is performed, after the timing is finished, prompting that the upgrade fails, displaying error node information, and skipping to the step 10.

Step 9: reselecting the protocol packet and the source program data by the user.

Step 10: ending.

The unencrypted heartbeat protocol includes a header byte, a device number, a type, a timestamp, a check bit, and a tail byte in sequence.

An unencrypted heartbeat protocol returned by the to-be-upgraded device includes a header byte, a device number, a type, a timestamp, a check bit, and a tail byte in sequence, where the device number has 4 bytes, first two bytes in the 4 bytes are high bytes, last two bytes in the 4 bytes are low bytes, the high bytes represent a type of the device, and the low bytes represent a specific number of the device.

The encrypted heartbeat protocol includes a header byte, a device number, a type, a heartbeat password, a check bit, and a tail byte in sequence.

An encrypted heartbeat protocol returned by the to-be-upgraded device includes a header byte, a device number, a type, a source program version number, a check bit, and a tail byte in sequence.

Preferably, the heartbeat password is not identical to the password in the password pool, and the source program version number is a version number of an original program in the to-be-upgraded device.

Preferably, each of the protocol packets corresponds to several respective ones of the encrypted heartbeat protocols, and the encrypted heartbeat protocols have different encrypted data, respectively; the encrypted heartbeat protocol is an encrypted protocol packet which is packaged and sent after the timestamp in the unencrypted heartbeat protocol is modified into heartbeat password data.

Preferably, each of the passwords in the password pool has uniqueness, each of the passwords only corresponds to a respective one of the encrypted heartbeat protocols, and each of the passwords in the password pool is not identical to the heartbeat password in the respective one of the encrypted heartbeat protocols; a data structure of the password pool is divided into two parts including a first part and a second part, where the first part is configured for storing storage addresses of the passwords and addresses of the encrypted heartbeat protocols mapped, and the second part is configured for storing data of the passwords and relevant update information.

Preferably, when the step 4 and the step 6 are executed, the source program is stored in the source program data pool in two parts, i.e., the first part of the source program and the second part of the source program; a source program attribute is added in front of an upgrading packet of the first part, and the source program attribute includes the source program version number.

Preferably, when the step 7 is executed, if no correct reply of the to-be-upgraded device is received, which proves a failure of a verification of the password in the password pool, data of the password in the password pool used and update information related to the data are displayed, and the update information includes password update time information and old password information reserved during a last update.

Preferably, when the step 8 and the step 9 are executed, the user performs the selection on a touch screen provided on the portable upgrading device.

The present disclosure has the following beneficial effects: the novel portable program upgrading method according to the present disclosure achieves the technical objectives that the programs of a plurality of different to-be-upgraded devices are upgraded by one portable upgrading device, and the program upgrading accuracy is guaranteed; in the present disclosure, the heartbeat protocol is adopted to confirm whether the upgrading device is correct, which greatly reduces programming work of protocol data and only requires minor modification of heartbeat data, thus achieving convenience and wide applicability; in the present disclosure, the upgrading program is divided into two upgrading packets to be sent to the to-be-upgraded device, an error in the upgrading process may be checked step by step, a wrong operation may be interrupted rapidly, and a high efficiency of upgrading work is guaranteed; in the present disclosure, a password check is performed while the upgrading packet is sent, thus greatly increasing confidentiality of the upgrading work and guaranteeing accuracy of the upgrading program; the method is suitable for a device with an operating system, such as an ARM system, or the like.

### BRIEF DESCRIPTION OF THE DRAWINGS

FIG. 1 is a schematic diagram of a mapping relationship of a program attribute lookup table according to the present disclosure.
FIG. 2 is a schematic diagram of a data structure of a protocol packet pool according to the present disclosure.
FIG. 3 is a schematic diagram of a data structure of a source program data pool according to the present disclosure.
FIG. 4 is a schematic diagram of a data structure of a password pool according to the present disclosure.
FIG. 5 is a flow chart of program upgrade according to the present disclosure.

### DETAILED DESCRIPTION OF THE EMBODIMENTS

The following clearly and completely describes the technical solutions of the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

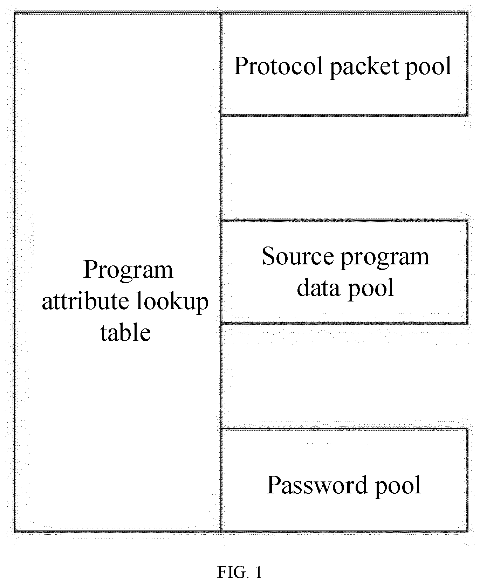

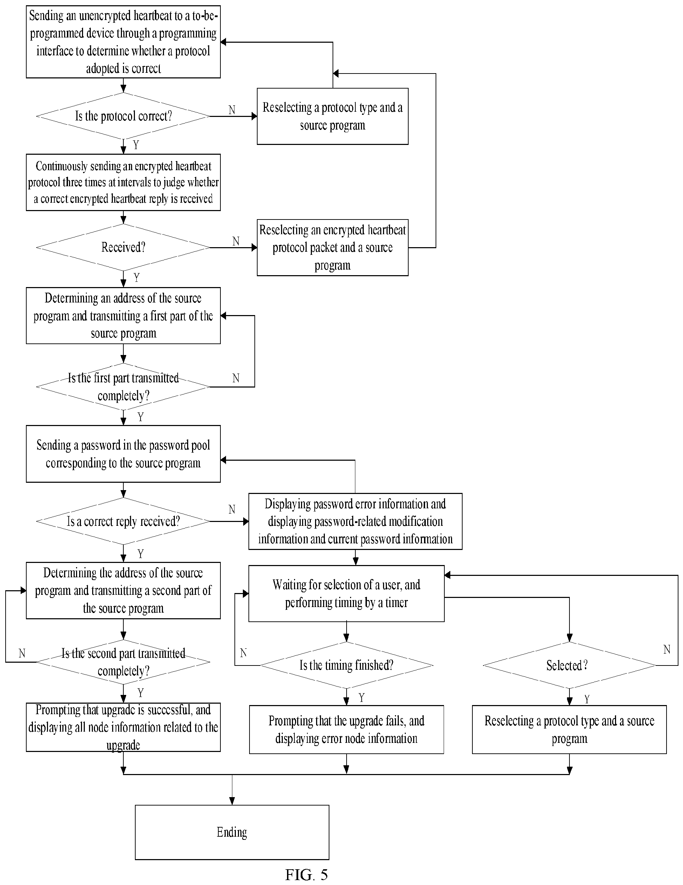

A novel portable program upgrading method as shown in FIGS. 1 to 5 includes the following steps:
step 1: establishing a protocol packet pool in a portable upgrading device, the protocol packet pool including a protocol packet database and an encrypted heartbeat protocol database, storing a plurality of encrypted heartbeat protocols in the encrypted heartbeat protocol database, and storing a plurality of protocol packets in the protocol packet database; establishing a mapping relation table between storage addresses of the protocol packets and the encrypted heartbeat protocols in the protocol packet pool; establishing a source program data pool in the portable upgrading device, and storing several pieces of source program data in the source program data pool, the source program data being configured for upgrading a program of a to-be-upgraded device, each piece of source program data being divided into a source program attribute, a first part upgrading packet and a second part upgrading packet, the source program data pool being divided into two storage regions which are a high-byte storage region and a low-byte storage region respectively, the high-byte storage region being configured for storing the source program attributes and the first part upgrading packets of all the source program data, and the low-byte storage region being configured for storing the second part upgrading packets of all the source program data; establishing a password pool in the portable upgrading device, the password pool including a password comparison table storage region and a password data storage region, and storing specific data of several passwords and last replacement information in the password data storage region, the specific data of the passwords including the passwords, and the last replacement information being an old password reserved after a password of the passwords is replaced, and replacement time information; establishing and storing a relationship list among a storage address of the source program data, a password storage address corresponding to the source program data and a protocol packet address corresponding to a source program in the password comparison table storage region; and establishing a program attribute lookup module in the portable upgrading device, establishing a mapping relationship list among the protocol packet pool, the source program data pool and the password pool in the program attribute lookup module, and establishing a source program retrieval engine.
Step 2: sending an unencrypted heartbeat protocol to the to-be-upgraded device by the portable upgrading device through a programming interface to determine whether a protocol packet used is correct, and if the protocol packet is incorrect at this point, returning no heartbeat protocol data by the to-be-upgraded device, displaying, by the portable upgrading device, information of reselecting a type of the protocol packet and a source program thereof, prompting an operator to perform selection, and then executing the step 2; and if the protocol packet is correct, returning heartbeat protocol data by the to-be-upgraded device, and executing step 3.
Step 3: continuously sending, by the portable upgrading device, an encrypted heartbeat protocol of the encrypted heartbeat protocols three times at intervals to judge whether a correct encrypted heartbeat reply is received; if the correct encrypted heartbeat reply is received after the encrypted heartbeat protocol is sent, which proves that a heartbeat protocol between the portable upgrading device and the to-be-upgraded device is correct, executing step 4; and if no correct encrypted heartbeat reply is received after the encrypted heartbeat protocol is sent, which proves that the heartbeat protocol between the portable upgrading device and the to-be-upgraded device is incorrect, and a version of the corresponding source program is also incorrect, at this point, prompting the operator to reselect an encrypted heartbeat protocol packet and a source program, and after the reselection by the operator, executing the step 2.
   Since the same protocol packet may correspond to a plurality of different encrypted heartbeat protocols, the encrypted heartbeat protocol is required to be determined, and then, whether the version of the source program of an upgrading program is selected correctly is determined.
Step 4: determining an address of the source program and transmitting a first part of the source program to the to-be-upgraded device by the portable upgrading device.

In the present embodiment, the protocol packet pool and the source program data pool have a mapping relationship that the protocol packet pool records the address of the encrypted heartbeat protocol, and the encrypted heartbeat protocol records an attribute address of the source program, thus accurately finding the source program corresponding to the protocol packet.

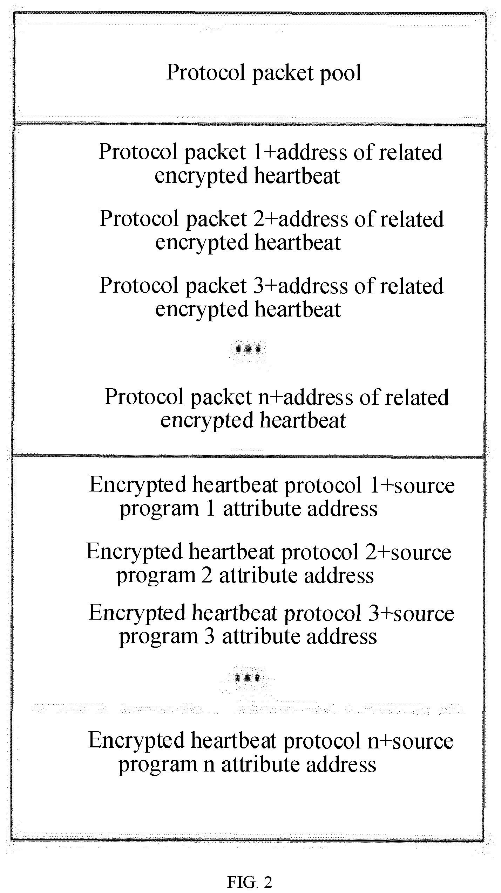

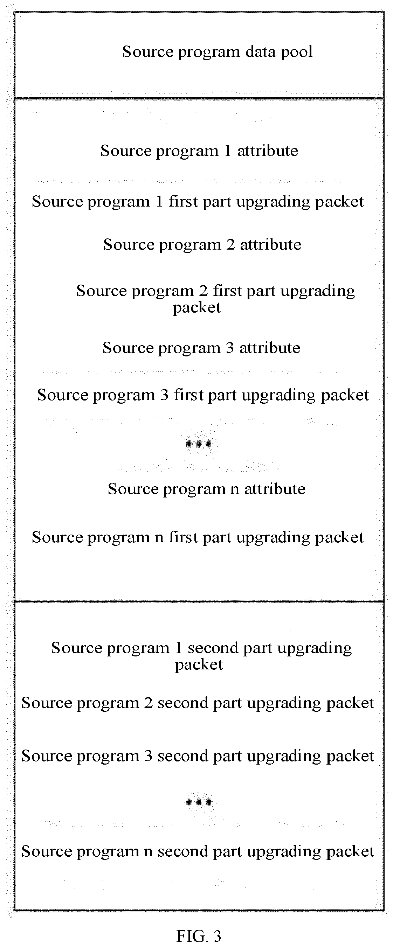

As shown in FIGS. 2 and 3, protocol packet 1, protocol packet 2,..., protocol packet n represent a plurality of protocol packets, and encrypted heartbeat protocol 1, encrypted heartbeat protocol 2,..., encrypted heartbeat protocol n represent a plurality of encrypted heartbeat protocols; during storage, a data structure has the following storage modes: protocol packet 1+address of related encrypted heartbeat, and encrypted heartbeat protocol 1+source program 1 attribute address.

Since one protocol packet may correspond to a plurality of encrypted heartbeat protocols, the protocol packet and the encrypted heartbeat protocol have mapping modes that the protocol packet 1 corresponds to the encrypted heartbeat protocol 1 and the encrypted heartbeat protocol 2, the protocol packet 2 corresponds to the encrypted heartbeat protocol 3 and the encrypted heartbeat protocol 4, and thus, the accurate source program is found in the present disclosure.

Step 5: after the first part of the source program is transmitted completely, sending a password in the password pool corresponding to the source program by the portable upgrading device; and judging, by the portable upgrading device, whether a correct reply of the to-be-upgraded device is received: if the correct reply of the to-be-upgraded device is received, executing step 6; and if no correct reply of the to-be-upgraded device is received, executing step 7.

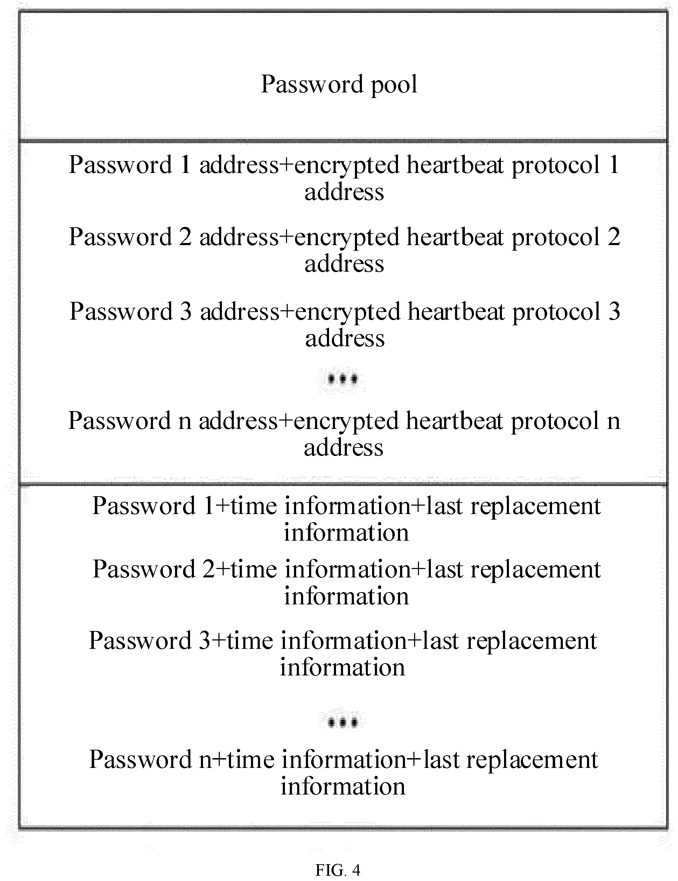

FIG. 4 shows a data storage structure in the password pool, the data structure of the password pool is divided into two parts, one part is configured for storing the storage address of the password and the address of the mapped encrypted heartbeat protocol, and the other part is configured for storing data of the password and related update information.

For example, password 1 address+encrypted heartbeat protocol 1 address, i.e., the storage address of password 1 and the storage address of the mapped encrypted heartbeat protocol 1.

Password 1+time information+last replacement information, i.e., specific data of the password 1, password update time information, and old password information reserved during a last update.

In the present disclosure, a unique password mode is adopted, thus greatly increasing confidentiality of the source program; upgrading work may be divided into two parts, thus increasing process inspection strength and guaranteeing accuracy of the upgrading work.

Step 6: determining the address of the source program and transmitting a second part of the source program to the to-be-upgraded device by the portable upgrading device; and after the second part of the source program is transmitted completely, prompting, by the portable upgrading device, that upgrade is successful, displaying, by the portable upgrading device, all node information related to the upgrade, and skipping to step 10.

As shown in FIG. 3, the source program in the present disclosure is stored in the source program data pool in two parts, i.e., the first part of the source program and the second part of the source program, that is, the first part upgrading packet and the second part upgrading packet shown in FIG. 3; source program 1, source program 2,..., source program n in FIG. 3 represent a plurality of source program packets, and in order to represent a version number of the source program, in the present disclosure, the source program attribute is added in front of the first part upgrading packet, and the source program attribute includes the source program version number.

In the present disclosure, the upgrading process is divided into an unencrypted heartbeat protocol node, an encrypted heartbeat protocol node, a first part upgrading packet node, a node for checking the password of the password pool and a second part upgrading packet node, and after the upgrade is finished, related information of each node is displayed on a display screen interface, thereby greatly enhancing traceability of the upgrading work and increasing the accuracy of the upgrading work.

Step 7: displaying password error information and displaying password-related modification information and current password information by the portable upgrading device, and if no correct reply is received, which proves failure of verification of the password of the password pool, at this point, displaying the password data in the used password pool and the update information related to the password data, the update information including the password update time information and the old password information reserved during the last update.

Step 8: waiting for selection of a user by the portable upgrading device, and performing timing by a timer: if the user performs selection, executing step 9; and if no selection operation is performed, after the timing is finished, prompting that the upgrade fails, displaying error node information, and skipping to the step 10.

Step 9: reselecting the protocol packet and the source program data by the user.

Step 10: ending.

Preferably, the unencrypted heartbeat protocol includes a header byte, a device number, a type, a timestamp, a check bit, and a tail byte in sequence.

An unencrypted heartbeat protocol returned by the to-be-upgraded device includes a header byte, a device number, a type, a timestamp, a check bit, and a tail byte in sequence.

The device number has 4 bytes, the first two bytes are high bytes, the last two bytes are low bytes, the high bytes represent a type of the device, and the low bytes represent a specific number of the device.

In the present embodiment, the protocols adopted by all the to-be-upgraded devices include the heartbeat protocols.

The encrypted heartbeat protocol includes a header byte, a device number, a type, a heartbeat password, a check bit, and a tail byte in sequence.

An encrypted heartbeat protocol returned by the to-be-upgraded device includes a header byte, a device number, a type, a source program version number, a check bit, and a tail byte in sequence.

The heartbeat password is not identical to the password in the password pool; and the source program version number is a version number of an original program in the to-be-upgraded device.

In the present embodiment, the original program of the to-be-upgraded device may be well determined by the encrypted heartbeat protocol, and the to-be-upgraded source program may be selected accurately.

Preferably, each of the protocol packets corresponds to several respective ones of the encrypted heartbeat protocols, and the encrypted heartbeat protocols have different encrypted data, respectively; the encrypted heartbeat protocol is an encrypted protocol packet which is packaged and sent after the timestamp in the unencrypted heartbeat protocol is modified into heartbeat password data.

Preferably, each of the passwords in the password pool has uniqueness, each of the passwords only corresponds to a respective one of the encrypted heartbeat protocols, and each of the passwords in the password pool is not identical to the heartbeat password in the respective one of the encrypted heartbeat protocols; a data structure of the password pool is divided into two parts including a first part and a second part, where the first part is configured for storing storage addresses of the passwords and addresses of the encrypted heartbeat protocols mapped, and the second part is configured for storing data of the passwords and relevant update information.

Preferably, when the step 4 and the step 6 are executed, the source program is stored in the source program data pool in two parts, i.e., the first part of the source program and the second part of the source program; a source program attribute is added in front of an upgrading packet of the first part, and the source program attribute includes the source program version number.

Preferably, when the step 7 is executed, if no correct reply of the to-be-upgraded device is received, which proves a failure of a verification of the password in the password pool, data of the password in the password pool used and update information related to the data are displayed, and the update information includes password update time information and old password information reserved during a last update.

Preferably, when the step 8 and the step 9 are executed, the user performs the selection on a touch screen provided on the portable upgrading device.

In the present embodiment, the portable upgrading device includes the touch screen, a main control chip, the programming interface, and three flash memories, the three flash memories are communicated with the main control chip through different IO ports respectively, the programming interface is communicated with the main control chip, and the touch screen is communicated with the main control chip through a serial port.

The three flash memories are set as flash memory A, flash memory B, and flash memory C respectively, the protocol packet pool is established in the flash memory A, the flash memory A is divided into two data storage regions, and the protocol packet database and the encrypted heartbeat protocol database are stored in the two data storage regions respectively.

The program attribute lookup module is set in the main control chip.

The source program data pool is established in the flash memory B, the flash memory B is divided into two storage regions, and the source program data is divided into two parts to be stored in the two storage regions of the flash memory B.

The password pool is established in the flash memory C, the flash memory C is divided into two storage regions, one storage region is configured for storing the storage address of the password and the address of the mapped encrypted heartbeat protocol, and the other storage region is configured for storing the data of the password and the related update information.

In the present embodiment, since the source program data, the passwords, and the protocol packets have various types, the source program data, the passwords, and the protocol packets are required to be stored by the plurality of flash memories to facilitate data retrieval and interaction.

The novel portable program upgrading method according to the present disclosure achieves the technical objectives that the programs of a plurality of different to-be-upgraded devices are upgraded by one portable upgrading device, and the program upgrading accuracy is guaranteed; in the present disclosure, the heartbeat protocol is adopted to confirm whether the upgrading device is correct, which greatly reduces programming work of protocol data and only requires minor modification of heartbeat data, thus achieving convenience and wide applicability; in the present disclosure, the upgrading program is divided into two upgrading packets to be sent to the to-be-upgraded device, an error in the upgrading process may be checked step by step, a wrong operation may be interrupted rapidly, and a high efficiency of upgrading work is guaranteed; in the present disclosure, a password check is performed while the upgrading packet is sent, thus greatly increasing confidentiality of the upgrading work and guaranteeing accuracy of the upgrading program; the method is suitable for a device with an operating system, such as an ARM system, or the like.

Those skilled in the art may understand that all or part of the steps of the method according to the above-mentioned embodiments may be implemented by a program instructing related hardware, and the program may be stored in a computer-readable storage medium, and when executed, includes one or a combination of the steps of the method embodiment.

Furthermore, functional units in the embodiments of the present disclosure may be integrated into one processing module, or each of the units may exist alone physically, or two or more units are integrated into one module. The above-mentioned integrated module may be implemented in a form of hardware or software functional module. When implemented in a form of software functional module and sold or used as an independent product, the integrated module can also be stored in a computer readable storage medium.

Although embodiments of the present disclosure have been shown and illustrated, it shall be understood that the above-mentioned embodiments are exemplary and not construed as limitations to the present disclosure.

## Claims

1. A novel portable program upgrading method, **characterized by** comprising the following steps:
step 1: establishing a protocol packet pool in a portable upgrading device, the protocol packet pool comprising a protocol packet database and an encrypted heartbeat protocol database, storing a plurality of encrypted heartbeat protocols in the encrypted heartbeat protocol database, and storing a plurality of protocol packets in the protocol packet database; establishing a mapping relation table between storage addresses of the protocol packets and the encrypted heartbeat protocols in the protocol packet pool; establishing a source program data pool in the portable upgrading device, and storing several pieces of source program data in the source program data pool, the source program data being configured for upgrading a program of a to-be-upgraded device; establishing a password pool in the portable upgrading device, the password pool comprising a password comparison table storage region and a password data storage region, and storing specific data of several passwords and last replacement information in the password data storage region, the specific data of the passwords comprising the passwords, and the last replacement information being an old password reserved after a password of the passwords is replaced, and replacement time information; establishing and storing a relationship list among a storage address of the source program data, a password storage address corresponding to the source program data, and a protocol packet address corresponding to a source program in the password comparison table storage region; and establishing a program attribute lookup module in the portable upgrading device, establishing a mapping relationship list among the protocol packet pool, the source program data pool and the password pool in the program attribute lookup module, and establishing a source program retrieval engine;
step 2: sending an unencrypted heartbeat protocol to the to-be-upgraded device by the portable upgrading device through a programming interface to determine whether a protocol packet used is correct, and if the protocol packet is incorrect at this point, returning no heartbeat protocol data by the to-be-upgraded device, displaying, by the portable upgrading device, information of reselecting a type of the protocol packet and a source program thereof, prompting an operator to perform a selection, and then executing the step 2; and if the protocol packet is correct, returning heartbeat protocol data by the to-be-upgraded device, and executing step 3,
wherein the unencrypted heartbeat protocol comprises a header byte, a device number, a type, a timestamp, a check bit, and a tail byte in sequence; an unencrypted heartbeat protocol returned by the to-be-upgraded device comprises a header byte, a device number, a type, a timestamp, a check bit, and a tail byte in sequence, wherein the device number has 4 bytes, first two bytes in the 4 bytes are high bytes, last two bytes in the 4 bytes are low bytes, the high bytes represent a type of the device, and the low bytes represent a specific number of the device; each of the encrypted heartbeat protocols comprises a header byte, a device number, a type, a heartbeat password, a check bit, and a tail byte in sequence; an encrypted heartbeat protocol returned by the to-be-upgraded device comprises a header byte, a device number, a type, a source program version number, a check bit, and a tail byte in sequence;
step 3: continuously sending, by the portable upgrading device, an encrypted heartbeat protocol of the encrypted heartbeat protocols three times at intervals to judge whether a correct encrypted heartbeat reply is received; if the correct encrypted heartbeat reply is received after the encrypted heartbeat protocol is sent, which proves that a heartbeat protocol between the portable upgrading device and the to-be-upgraded device is correct, executing step 4; and if no correct encrypted heartbeat reply is received after the encrypted heartbeat protocol is sent, which proves that the heartbeat protocol between the portable upgrading device and the to-be-upgraded device is incorrect, and a version of the corresponding source program is also incorrect, prompting the operator to reselect an encrypted heartbeat protocol packet and a source program, and after the reselection by the operator, executing the step 2;
step 4: determining an address of the source program and transmitting a first part of the source program to the to-be-upgraded device by the portable upgrading device;
step 5: after the first part of the source program is transmitted completely, sending a password of the passwords in the password pool corresponding to the source program by the portable upgrading device; and judging, by the portable upgrading device, whether a correct reply of the to-be-upgraded device is received; if the correct reply of the to-be-upgraded device is received, executing step 6; and if no correct reply of the to-be-upgraded device is received, executing step 7;
step 6: determining the address of the source program and transmitting a second part of the source program to the to-be-upgraded device by the portable upgrading device; and after the second part of the source program is transmitted completely, prompting, by the portable upgrading device, that an upgrade is successful, displaying, by the portable upgrading device, all node information related to the upgrade, and skipping to step 10;
step 7: displaying password error information and displaying password-related modification information and current password information by the portable upgrading device;
step 8: waiting for a selection of a user by the portable upgrading device, and performing timing by a timer; if the user performs the selection, executing step 9; and if no selection operation is performed, after the timing is finished, prompting that the upgrade fails, displaying error node information, and skipping to the step 10;
step 9: reselecting a protocol packet and source program data by the user; and
step 10: ending.

2. The novel portable program upgrading method according to claim 1, **characterized in that** the heartbeat password is not identical to the password in the password pool; and the source program version number is a version number of an original program in the to-be-upgraded device.

3. The novel portable program upgrading method according to claim 1, **characterized in that** each of the protocol packets corresponds to several respective ones of the encrypted heartbeat protocols, and the encrypted heartbeat protocols have different encrypted data, respectively; and the encrypted heartbeat protocol is an encrypted protocol packet which is packaged and sent after the timestamp in the unencrypted heartbeat protocol is modified into heartbeat password data.

4. The novel portable program upgrading method according to claim 1, **characterized in that** each of the passwords in the password pool has uniqueness, each of the passwords only corresponds to a respective one of the encrypted heartbeat protocols, and each of the passwords in the password pool is not identical to the heartbeat password in the respective one of the encrypted heartbeat protocols; a data structure of the password pool is divided into two parts comprising a first part and a second part, wherein the first part is configured for storing storage addresses of the passwords and addresses of the encrypted heartbeat protocols mapped, and the second part is configured for storing data of the passwords and relevant update information.

5. The novel portable program upgrading method according to claim 1, **characterized in that** when the step 4 and the step 6 are executed, the source program is stored in the source program data pool in two parts, i.e., the first part of the source program and the second part of the source program; a source program attribute is added in front of an upgrading packet of the first part, and the source program attribute comprises the source program version number.

6. The novel portable program upgrading method according to claim 1, **characterized in that** when the step 7 is executed, if no correct reply of the to-be-upgraded device is received, which proves a failure of a verification of the password in the password pool, data of the password in the password pool used and update information related to the data are displayed, and the update information comprises password update time information and old password information reserved during a last update.

7. The novel portable program upgrading method according to claim 1, **characterized in that** when the step 8 and the step 9 are executed, the user performs the selection on a touch screen provided on the portable upgrading device.

## Patentansprüche

1. Neuartiges tragbares Verfahren zur Aktualisierung einer Programme, **dadurch gekennzeichnet, dass** es die folgenden Schritte umfasst:
Schritt 1: Einrichten eines Protokollpaket-Pools in einer tragbaren Aktualisierungsvorrichtung, wobei der Protokollpaket-Pool eine Protokollpaket-Datenbank und eine verschlüsselte Heartbeat-Protokoll-Datenbank umfasst, Speichern einer Vielzahl von verschlüsselten Heartbeat-Protokollen in der verschlüsselten Heartbeat-Protokoll-Datenbank und Speichern einer Vielzahl von Protokollpaketen in der Protokollpaket-Datenbank; Einrichten einer Abbildungsbeziehungstabelle zwischen Speicheradressen der Protokollpakete und den verschlüsselten Heartbeat-Protokollen in dem Protokollpaket-Pool; Einrichten eines Quellprogrammdaten-Pools in der tragbaren Aktualisierungsvorrichtung und Speichern mehrerer Teile von Quellprogrammdaten in dem Quellprogrammdaten-Pool, wobei die Quellprogrammdaten zum Aktualisieren eines Programms einer zu aktualisierenden Vorrichtung konfiguriert sind; Einrichten eines Passwort-Pools in der tragbaren Aktualisierungsvorrichtung, wobei der Passwort-Pool einen Passwort-Vergleichstabellen-Speicherbereich und einen Passwort-Datenspeicherbereich umfasst, und Speichern spezifischer Daten mehrerer Passwörter und letzter Ersetzungsinformationen in dem Passwort-Datenspeicherbereich, Wobei die spezifischen Daten der Passwörter die Passwörter selbst umfassen, und wobei die letzte Ersetzungsinformation ein altes Passwort und eine Ersetzungszeitinformation ist, wobei das alte Passwort reserviert wurde, nachdem ein Passwort der Passwörter ersetzt wurde; Einrichten und Speichern einer Beziehungsliste zwischen einer Speicheradresse der Quellprogrammdaten, einer Passwortspeicheradresse, die den Quellprogrammdaten entspricht, und einer Protokollpaketadresse, die einem Quellprogramm entspricht, in dem Passwortvergleichstabellen-Speicherbereich; und und Einrichten eines Programmattribut-Suchmoduls in der tragbaren Aktualisierungsvorrichtung, Einrichten einer Abbildungsbeziehungsliste zwischen dem Protokollpaket-Pool, dem Quellprogrammdaten-Pool und dem Passwort-Pool in dem Programmattribut-Suchmodul und Einrichten einer Quellprogramm-Wiedergewinnungsmaschine;
Schritt 2: Senden eines unverschlüsselten Heartbeat-Protokolls an die zu aktualisierenden Vorrichtung durch die tragbare Aktualisierungsvorrichtung über eine Programmierschnittstelle, um festzustellen, ob ein verwendetes Protokollpaket korrekt ist, und wenn das Protokollpaket an diesem Punkt inkorrekt ist, Zurücksenden von keinen Heartbeat-Protokolldaten durch die zu aktualisierenden Vorrichtung, Anzeigen von Informationen zur erneuten Auswahl eines Typs des Protokollpakets und eines Quellprogramms davon durch die tragbare Aktualisierungsvorrichtung, Auffordern eines Bedieners, eine Auswahl vorzunehmen, und dann Ausführen des Schritts 2; und wenn das Protokollpaket korrekt ist, Zurücksenden von Heartbeat-Protokolldaten durch die zu aktualisierenden Vorrichtung, und Ausführen von Schritt 3,
wobei das unverschlüsselte Heartbeat-Protokoll ein Header-Byte, eine Vorrichtungsnummer, einen Typ, einen Zeitstempel, ein Prüfbit und ein Tail-Byte in Folge umfasst; und wobei ein unverschlüsseltes Heartbeat-Protokoll, das von der zu aktualisierenden Vorrichtung zurückgegeben wird, ein Header-Byte, eine Vorrichtungsnummer, einen Typ, einen Zeitstempel, ein Prüfbit und ein Tail-Byte in Folge umfasst, wobei die Vorrichtungsnummer 4 Bytes hat, die ersten zwei Bytes in den 4 Bytes High-Bytes sind, die letzten zwei Bytes in den 4 Bytes Low-Bytes sind, die High-Bytes einen Typ der Vorrichtung darstellen und die Low-Bytes eine spezifische Vorrichtungsnummer darstellen; wobei jedes der verschlüsselten Heartbeat-Protokolle ein Header-Byte, eine Vorrichtungsnummer, einen Typ, ein Heartbeat-Passwort, ein Prüfbit und ein Tail-Byte in Folge umfasst; wobei ein verschlüsseltes Heartbeat-Protokoll, das von der zu aktualisierenden Vorrichtung zurückgegeben wird, ein Header-Byte, eine Vorrichtungsnummer, einen Typ, eine Quellprogramm-Versionsnummer, ein Prüfbit und ein Tail-Byte in Folge umfasst;
Schritt 3: kontinuierliches Senden eines verschlüsselten Heartbeat-Protokolls der verschlüsselten Heartbeat-Protokolle durch die tragbare Aktualisierungsvorrichtung dreimal in Intervallen, um zu beurteilen, ob eine korrekte verschlüsselte Heartbeat-Antwort empfangen wird; wenn nach dem Senden des verschlüsselten Heartbeat-Protokolls die korrekte verschlüsselte Heartbeat-Antwort empfangen wird, was beweist, dass ein Heartbeat-Protokoll zwischen der tragbaren Aktualisierungsvorrichtung und der zu aktualisierenden Vorrichtung korrekt ist, Ausführen von Schritt 4; und wenn nach dem Senden des verschlüsselten Heartbeat-Protokolls keine korrekte verschlüsselte Heartbeat-Antwort empfangen wird, die beweist, dass das Heartbeat-Protokoll zwischen der tragbaren Aktualisierungsvorrichtung und der zu aktualisierenden Vorrichtung falsch ist, und eine Version des entsprechenden Quellprogramms ebenfalls falsch ist, Auffordern des Bedieners, ein verschlüsseltes Heartbeat-Protokollpaket und ein Quellprogramm erneut auszuwählen, und nach der erneuten Auswahl durch den Bediener, Ausführen des Schritts 2;
Schritt 4: Bestimmen einer Adresse des Quellprogramms und Übertragen eines ersten Teils des Quellprogramms an die zu aktualisierenden Vorrichtung durch die tragbare Aktualisierungsvorrichtung,
Schritt 5: nachdem der erste Teil des Quellprogramms vollständig übertragen wurde, Senden eines Passworts der Passwörter im Passwort-Pool, die dem Quellprogramm entsprechen, durch die tragbare Aktualisierungsvorrichtung, und Beurteilen, durch die tragbare Aktualisierungsvorrichtung, ob eine korrekte Antwort der zu aktualisierenden Vorrichtung empfangen wird; wenn die korrekte Antwort der zu aktualisierenden Vorrichtung empfangen wird, Ausführen von Schritt 6; und
wenn keine korrekte Antwort der zu aktualisierenden Vorrichtung empfangen wird, Ausführung von Schritt 7;
Schritt 6: Bestimmen der Adresse des Quellprogramms und Übertragen eines zweiten Teils des Quellprogramms an die zu aktualisierenden Vorrichtung durch die tragbare Aktualisierungsvorrichtung, und nachdem der zweite Teil des Quellprogramms vollständig übertragen wurde, Anmelden durch die tragbare Aktualisierungsvorrichtung, dass eine Aktualisierung erfolgreich ist, Anzeigen aller Aktualisierungsbezogenen Knoteninformationen durch die tragbare Aktualisierungsvorrichtung und Springen zu Schritt 10;
Schritt 7: Anzeigen von Passwortfehlerinformationen und Anzeigen von passwortbezogenen Änderungsinformationen und aktuellen Passwortinformationen durch die tragbare Aktualisierungsvorrichtung,
Schritt 8: Warten auf eine Auswahl eines Benutzers durch die tragbare Aktualisierungsvorrichtung und Durchführen einer Zeitmessung durch einen Timer; wenn der Benutzer die Auswahl durchführt, Ausführen von Schritt 9; und wenn keine Auswahloperation durchgeführt wird, nachdem die Zeitmessung abgeschlossen ist, Anmelden, dass die Aktualisierung fehlschlägt, Anzeige von Fehlerknoteninformationen und Springen zu Schritt 10;
Schritt 9: erneutes Auswählen eines Protokollpakets und der Quellprogrammdaten durch den Benutzer; und
Schritt 10: Beenden.

2. Neuartiges tragbares Verfahren zur Aktualisierung einer Programme nach Anspruch 1, **dadurch gekennzeichnet, dass** das Heartbeat-Passwort nicht mit dem Passwort im Passwort-Pool identisch ist; und dass die Quellprogramm-Versionsnummer eine Quellprogramm-Versionsnummer in der zu aktualisierenden Vorrichtung ist.

3. Neuartiges tragbares Verfahren zur Aktualisierung einer Programme nach Anspruch 1, **dadurch gekennzeichnet, dass** jedes der Protokollpakete jeweils mehreren verschlüsselten Heartbeat-Protokollen entspricht und die verschlüsselten Heartbeat-Protokolle jeweils unterschiedliche verschlüsselte Daten aufweisen; wobei das verschlüsselte Heartbeat-Protokoll ein verschlüsseltes Protokollpaket ist, das verpackt und gesendet wird, nachdem der Zeitstempel im unverschlüsselten Heartbeat-Protokoll in Heartbeat-Passwortdaten geändert wurde.

4. Neuartiges tragbares Verfahren zur Aktualisierung einer Programme nach Anspruch 1, **dadurch gekennzeichnet, dass** jedes der Passwörter in dem Passwort-Pool eindeutig ist,wobei jedes der Passwörter nur einem jeweiligen der verschlüsselten Heartbeat-Protokolle entspricht und jedes der Passwörter in dem Passwort-Pool nicht mit dem Heartbeat-Passwort in dem jeweiligen der verschlüsselten Heartbeat-Protokolle identisch ist; wobei eine Datenstruktur des Passwort-Pools in zwei Teile unterteilt ist, die einen ersten Teil und einen zweiten Teil umfassen, wobei der erste Teil zum Speichern von Speicheradressen der Passwörter und Adressen der verschlüsselten Heartbeat-Protokolle, die abgebildet werden, konfiguriert ist, und der zweite Teil zum Speichern von Daten der Passwörter und relevanten Aktualisierungsinformationen konfiguriert ist.

5. Neuartiges tragbares Verfahren zur Aktualisierung einer Programme nach Anspruch 1, **dadurch gekennzeichnet, dass**, wenn der Schritt 4 und der Schritt 6 ausgeführt werden, das Quellprogramm in dem QuellprogrammdatenPool in zwei Teilen gespeichert wird, d.h. in dem ersten Teil des Quellprogramms und in dem zweiten Teil des Quellprogramms; wobei ein Quellprogrammattribut vor einem Aktualisierungspaket des ersten Teils hinzugefügt wird, und wobei das Quellprogrammattribut die Quellprogramm-Versionsnummer umfasst.

6. Neuartiges tragbares Verfahren zur Aktualisierung einer Programme nach Anspruch 1, **dadurch gekennzeichnet, dass**, wenn der Schritt 7 ausgeführt wird, wenn keine korrekte Antwort der zu aktualisierenden Vorrichtung empfangen wird, was ein Fehler bei der Überprüfung des Passworts in dem Passwort-Pool beweist, Daten des verwendeten Passworts in dem Passwort-Pool und datenbezogenen Aktualisierungsinformationen angezeigt werden, und wobei die Aktualisierungsinformationen Passwortaktualisierungszeitinformationen und alte Passwortinformationen, die während einer letzten Aktualisierung reserviert wurden, umfassen.

7. Neuartiges tragbares Verfahren zur Aktualisierung einer Programme nach Anspruch 1, **dadurch gekennzeichnet, dass** der Benutzer bei der Ausführung von Schritt 8 und Schritt 9 die Auswahl auf einem an der tragbaren Aktualisierungsvorrichtung vorgesehenen Touchscreen vornimmt.

## Revendications

1. Nouvelle méthode de mise à jour du programme portable, **caractérisée en ce qu'**il comporte les étapes suivantes :
étape 1 : établir un pool de paquets de protocole dans un dispositif de mise à niveau portable, ledit pool de paquets de protocole comportant une base de données de paquets de protocole et une base de données de protocole de HeartBeat crypté, stockant une pluralité de protocoles de HeartBeat crypté dans ladite base de données de protocole de HeartBeat crypté, et stockant une pluralité de paquets de protocole dans ladite base de données de paquets de protocole ; établir un tableau de relation de mapping entre les adresses de stockage des paquets de protocole et les protocoles de HeartBeat crypté dans le pool de paquets de protocole ; établir un pool de données de programme source dans ledit dispositif de mise à jour portable, et stocker plusieurs données de programme source dans ledit pool de données de programme de source, la donnée de programme source étant configurée afin de mettre à jour un programme du dispositif qui a besoin de renouvellement ; établir un pool de mots de passe dans ledit dispositif de mise à jour portable, ledit pool de mots de passe comportant une région de stockage du tableau de comparaison des mots de passe et une région de stockage des données des mots de passe, et stocker les données particulières de plusieurs mots de passe et l'information de remplacement dernier dans une région de stockage de données des mots de passe, les données particulières des mots de passe comportant les mots de passe, et l'information de remplacement dernier étant un ancien mot de passe réservé après le remplacement d'un mot de passe, et l'information d'heure de remplacement ; établir et stocker une liste de relation parmi une adresse de stockage des données de programme source, une adresse de stockage des mots de passe correspondant aux données de programme source, et une adresse de paquets de protocole correspondant au programme source dans une région de stockage du tableau de comparaison des mots de passe ; et établir un module de recherche d'attributs de programme dans ledit dispositif de mise à jour portable, établir une liste de relation de mapping parmi ledit pool de paquets de protocole, ledit pool de données de programme source et ledit pool de mots de passe dans ledit module de recherche d'attributs de programme, et établir un moteur de recherche de programme source ;
étape 2 : le dispositif de mise à jour portable envoie un protocole de HeartBeat non crypté au dispositif à mettre à jour par une interface de programmation afin de déterminer si un paquet de protocole utilisé est correct, et si le paquet de protocole est incorrect à ce moment, le dispositif à mettre à jour ne retournant aucune donnée de protocole de HeartBeat, le dispositif de mise à jour portable affichant les informations d'un type de paquet de protocole re-sélectionné et d'un programme source de celui-ci, incitant un opérateur à effectuer une sélection, puis exécutant l'étape 2 ; si le paquet de protocole est correct, le dispositif à mettre à jour retournant les données de protocole de HeartBeat, et exécutant l'étape 3,
Dans lequel ledit protocole de HeartBeat non crypté comporte un octet de tête, un numéro du dispositif, un type, un horodatage, un bit de contrôle, et un octet de queue ; un protocole de HeartBeat non crypté retourné par le dispositif à mettre à jour comporte un octet de tête, un numéro du dispositif, un type, un horodatage, un bit de contrôle, et un octet de queue, dans lequel ledit numéro du dispositif a 4 octets, les deux premiers octets sont supérieurs octets, les deux autres octets sont inférieurs octets, lesdits supérieurs octets représentant un type du dispositif, et lesdits inférieurs octets représentant un particulier numéro du dispositif ; l'un des protocoles de HeartBeat crypté comporte un octet de tête, un numéro du dispositif, un type, un horodatage, un bit de contrôle, et un octet de queue ; un protocole de HeartBeat crypté retourné par le dispositif à mettre à jour comporte un octet de tête, un numéro du dispositif, un type, un numéro de version du programme source, un bit de contrôle, et un octet de queue ;
étape 3 : envoyer en continu par intervalles, par le dispositif de mise à jour portable, un protocole de HeartBeat crypté trois fois, afin de juger si une réponse correcte de HeartBeat crypté est reçue ; si la réponse correcte de HeartBeat crypté est reçue après que le protocole de HeartBeat crypté est envoyé, ce qui prouve qu'un protocole de HeartBeat entre le dispositif de mise à jour portable et le dispositif à mettre à jour est correct, en exécutant l'étape 4; si aucune réponse correcte de HeartBeat crypté n'est reçue après l'envoi du protocole de HeartBeat crypté, ce qui prouve qu'un protocole de HeartBeat entre le dispositif de mise à jour portable et le dispositif à mettre à jour est incorrect, et une version du programme source correspondant est également incorrecte, invitant l'opérateur à re-sélectionner un paquet de protocole de HeartBeat crypté et un programme source, après la re-sélection par l'opérateur, exécutant l'étape 2 ;
étape 4 : déterminer une adresse du programme source et transmettre la première partie au dispositif à mettre à jour par ledit dispositif de mise à jour portable ;
étape 5 : après la transmission complète de la première partie du programme source, envoyer un mot de passe dans le pool de mots de passe correspondant au programme source par le dispositif de mise à jour portable ; et juger, par le dispositif de mise à jour portable, si une réponse correcte du dispositif à mettre à jour est reçue ou non, si la réponse correcte est reçue, exécutant l'étape 6 ; et si la réponse correcte n'est pas reçue, exécutant l'étape 7 ;
étape 6 : déterminer l'adresse du programme source et transmettre la deuxième partie au dispositif à mettre à jour par ledit dispositif de mise à jour portable ; après la transmission complète de la deuxième partie du programme source, inciter, par le dispositif de mise à jour portable, qu'une mise à jour est réussie, afficher, par le dispositif de mise à jour portable, toutes les informations de noeud liées à la mise à jour et passer à l'étape 10 ;
étape 7 : afficher les informations sur l'erreur du mot de passe et afficher les informations sur la modification du mot de passe et du mot de passe actuel par le dispositif de mise à jour portable ;
étape 8 : attendre la sélection d'un utilisateur par le dispositif de mise à jour portable, et effectuer le chronométrage à l'aide d'une minuterie ; si l'utilisateur effectue la sélection, exécutant l'étape 9, si aucune opération de sélection n'est effectuée, à la fin de la chronométrage, ce qui entraîne l'échec de la mise à jour, et passer à l'étape 10 ;
étape 9 : re-sélectionner un paquet de protocole et des données de programme source par l'utilisateur ; et
étape 10 : fin.

2. Nouvelle méthode de mise à jour du programme portable selon la revendication 1, **caractérisée en ce que** le mot de passe de HeartBeat n'est pas identique au mot de passe dans le pool de mots de passe ; et le numéro de version du programme source est un numéro de version d'un programme original dans ledit dispositif à mettre à jour.

3. Nouvelle méthode de mise à jour du programme portable selon la revendication 1, **caractérisée en ce que** chacun des paquets de protocole correspond respectivement à plusieurs protocoles de HeartBeat crypté, et les protocoles de HeartBeat crypté ont des données cryptées différentes, respectivement ; et le protocole de HeartBeat crypté est un paquet de protocole crypté qui est empaqueté et envoyé après que le horodatage dans le protocole de HeartBeat non crypté est modifié en données de mot de passe de HeartBeat.

4. Nouvelle méthode de mise à jour du programme portable selon la revendication 1, **caractérisée en ce que** chacun des mots de passe dans le pool de mots de passe a l'unicité, chacun des mots de passe ne correspond qu'à l'un des protocoles de HeartBeat crypté, chacun des mots de passe dans le pool de mots de passe n'est pas identique au mot de passe de HeartBeat dans l'un des protocoles de HeartBeat crypté respectifs ; une structure de données du pool de mots de passe est divisée en deux parties comprenant une première partie et une deuxième partie, dans lesquelles la première partie est configurée pour stocker les adresses de stockage des mots de passe et les adresses des protocoles de HeartBeat crypté mappés, et la deuxième partie est configurée pour stocker les données des mots de passe et les informations de mise à jour correspondantes.

5. Nouvelle méthode de mise à jour du programme portable selon la revendication 1, **caractérisée en ce que**, lorsque l'étape 4 et l'étape 6 sont exécutées, le programme source divisé en deux parties (i, e),c'est-à-dire, la première partie du programme source et la deuxième partie du programme source, est stocké dans le pool de données du programme source ; un attribut de programme source est ajouté avant un paquet de mise à jour de la première partie, et ledit attribut de programme source comporte le numéro de version d'un programme source.

6. Nouvelle méthode de mise à jour du programme portable selon la revendication 1, **caractérisée en ce que**, lorsque l'étape 7 est exécutée, si aucune réponse correcte du dispositif à mettre à jour n'est reçue, ce qui prouve un échec de vérification du mot de passe dans le pool de mots de passe, les données du mot de passe dans le pool de mots de passe utilisé et les informations de mise à jour liées aux données sont affichées, et les informations de mise à jour comportent l'information de l'heure de mise à jour du mot de passe et l'information du mot de passe ancien réservé lors d'une dernière mise à jour.

7. Nouvelle méthode de mise à jour du programme portable selon la revendication 1, **caractérisée en ce que**, lorsque l'étape 8 et l'étape 9 sont exécutées, l'utilisateur effectue la sélection sur un écran tactile monté sur le dispositif de mise à jour portable.
